# DEMANDE DE BREVET EUROPEEN

(11) **EP 1 433 567 A1**
(43) Date de publication de la demande: **30.06.2004**
(21) Numéro de dépôt: 03292772.5
(22) Date de dépôt: 05.11.2003
(51) Int. Cl.: B23Q 5/04, B23Q 1/00, B23Q 1/28, B23B 39/16, B23Q 11/08, B23Q 3/155, B23Q 7/04, B23B 31/30

(54) **Dispositif de fixation d'une tete de support d'au moins un outil à une broche d'une machine-outil**

(30) Priorité: 24.12.2002 FR 0216665
(71) Demandeur: Process Conception Ingenierie S.A., 92190 Meudon (FR)
(72) Inventeur: Vidal, Olivier, 42170 St Just St Rambert (FR); Barra, Christian, 42170 St Just St Rambert (FR)
(74) Mandataire: Thinat, Michel

(57) **Abrégé**

La présente invention concerne un dispositif de fixation d'une tête de support d'au moins un outil à une broche d'une machine-outil.

Le dispositif est caractérisé en ce qu'il comprend une bague (21) fixée au corps (6) de broche (1) et réalisée en un matériau élastiquement déformable radialement vers l'extérieur de manière à se serrer dans une bride généralement cylindrique (20) solidaire du corps (7) de la tête (5) et à ainsi bloquer rigidement ce dernier au corps (6) de la broche (1).

L'invention trouve application dans le domaine de l'automobile.

## Description

La présente invention concerne un dispositif de fixation d'une tête de support d'au moins un outil à une broche d'une machine-outil.

Elle s'applique en particulier à une machine-outil d'usinage de pièces de véhicules automobiles.

Dans le domaine de l'automobile, les lignes actuelles d'usinage sont réalisées à partir de centres ou de machines d'usinage fonctionnant à grande vitesse et alliant productivité et flexibilité.

Pour être flexibles, ces centres d'usinage sont équipés d'un système de changement d'outils et du fait que les temps d'usinage sont très courts, la machine-outil réalise un très grand nombre de cycles de changement d'outils, par exemple un million de tels cycles. En moyenne il faut changer une vingtaine d'outils pour réaliser une pièce de véhicule automobile.

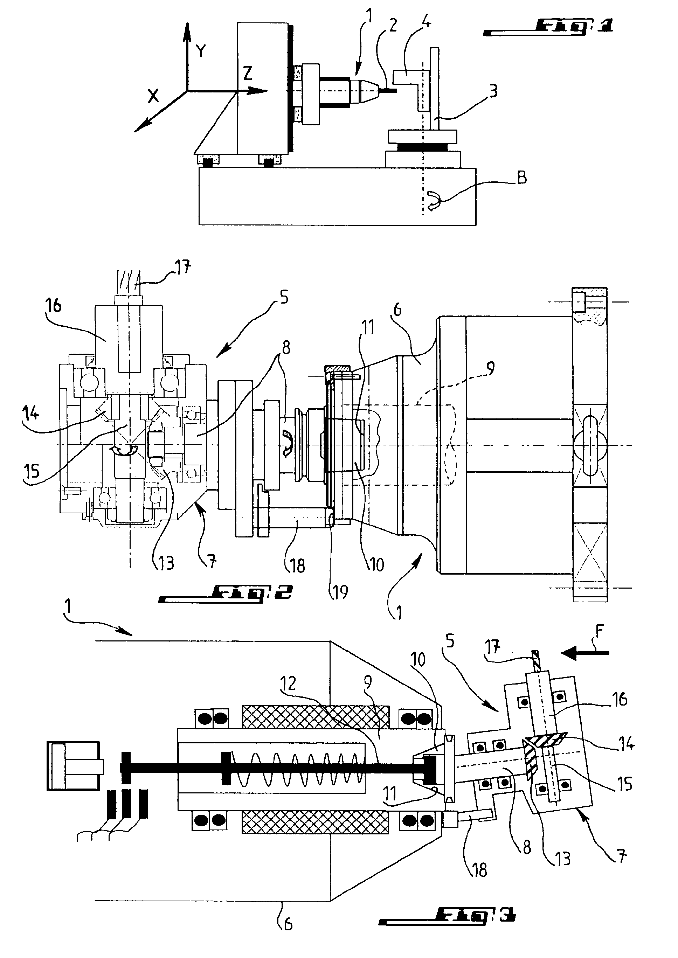

Une machine ou centre d'usinage est représentée schématiquement en figure 1 et est agencée de manière à déplacer dans l'espace la broche 1 d'entraînement de l'outil d'usinage 2 suivant les trois axes de translation X , Y et Z et à déplacer le support 3 de la pièce à usiner 4 autour d'un axe vertical de rotation B pour permettre d'accéder à quatre faces de la pièce 4.

Cependant, une machine de ce type ne permet pas de réaliser des perçages suivant la direction de l'axe Y et, parfois, pour éviter de repositionner la pièce à usiner 4 sur un deuxième support, il est nécessaire d'utiliser des têtes de support d'outils pourvues de renvois d'angle.

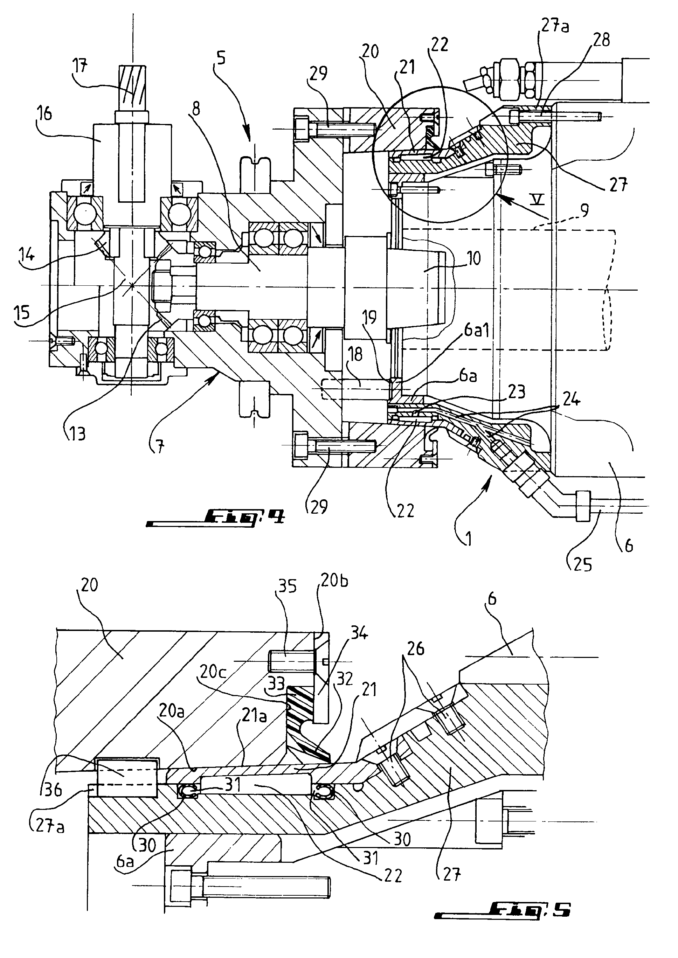

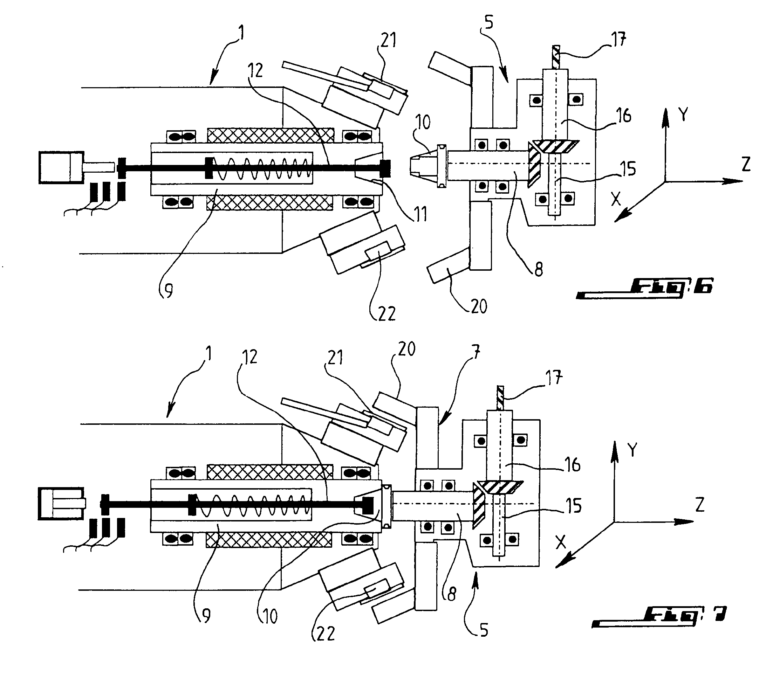

Les figures 2 et 3 représentent de façon plus détaillée une tête à renvoi d'angle 5 fixée au corps 6 de la broche principale 1 de la machine-outil et qui permet d'usiner la pièce 4 supportée par un seul et même support 3.

La tête 5 comprend un corps 7 immobilisé relativement au corps 6 de la broche principale 1 et comprenant, logés dans celui-ci, un arbre 8 monté à rotation dans le corps 7 et pouvant être accouplé coaxialement à l'arbre rotatif moteur 9 de la broche 1 par l'intermédiaire d'une douille tronconique 10 de l'arbre 8 rentrant dans un alésage tronconique conjugué 11 en bout de l'arbre 9 de la broche 1 en étant coincé axialement dans cet alésage par un tirant 12 s'étendant coaxialement dans l'arbre 9 et à déplacement commandé automatiquement par tout moyen approprié, comme cela est connu en soi.

Dans le corps 7 de la tête 5 sont également logés deux pignons coniques de renvoi d'angle 13, 14 en engrènement l'un avec l'autre et portés respectivement par l'arbre d'entraînement 8 et l'arbre 15 de la broche secondaire d'usinage de la tête 5 et qui est monté à rotation dans le corps 7 perpendiculairement à l'arbre 8. La broche d'usinage 16 de la tête 5 porte l'outil d'usinage 17, dans le cas présent un foret, et doit être suffisamment précise et rigide pour réaliser l'usinage définit par la machine-outil. Les pignons 13, 14 permettent de changer la direction de rotation de l'usinage, par exemple suivant la direction Y, et de transmettre à l'outil 17 la puissance de la broche principale 1 de la machine-outil.

La tête de renvoi d'angle 5 comprend également un doigt d'indexage 18 solidaire du corps 7 parallèlement à l'axe longitudinal de l'arbre d'entraînement 8 et dont l'extrémité libre peut s'engager dans une rainure droite ou en vé 19 du corps 6 de la broche 1 pour permettre le blocage en rotation du corps 7 de la tête de renvoi 5 relativement au corps 6 de la broche 1.

L'ensemble constituant la tête de renvoi d'angle 5 est considéré comme un outil particulier dans la machine-outil et doit pouvoir être stocké dans des magasins d'outils appropriés de la machine.

L'utilisation d'une tête de renvoi d'angle à outil d'usinage d'une pièce est une solution standard très répandue provenant de très nombreux fournisseurs de telles têtes, les seules spécificités étant la forme de l'extrémité du doigt d'indexage 18.

Cependant, cette solution connue souffre d'une rigidité insuffisante du corps 7 de la tête 5 pour des usinages d'ébauches pour lesquels l'effort d'usinage F représenté en figure 3 exercé sur l'outil 17 provoque un basculement en flexion et torsion de la tête 5 et une déformation de l'arbre d'entraînement 8 au niveau de sa liaison avec la douille 10 du fait que la taille de l'arbre d'entraînement est trop faible. Cette solution connue souffre également d'une précision insuffisante au niveau de la position angulaire du corps 7 de la tête 5 relativement au corps 6 de la broche 1 due à la rigidité du doigt d'indexage 18.

La présente invention a pour but d'éliminer les inconvénients ci-dessus en proposant un dispositif de fixation d'une tête de support d'au moins un outil à une broche d'une machine-outil selon lequel l'arbre de la broche logé dans le corps de celle-ci est accouplé coaxialement à un arbre d'entraînement ou de manoeuvre de l'outil logé dans le corps de la tête de support de cet outil, et qui est caractérisé en ce qu'il comprend une bague fixée à l'extrémité formant nez du corps de la broche coaxialement à cette dernière et réalisée en un matériau élastiquement déformable radialement vers l'extérieur sous l'effet d'une pression de fluide s'exerçant sous celle-ci de manière à se serrer dans une bride généralement cylindrique solidaire du corps de la tête de support et à ainsi bloquer rigidement ce dernier au corps de la broche.

De préférence, la bague déformable présente une surface périphérique externe tronconique pouvant se serrer sous l'effet de la pression de fluide sur une surface tronconique interne conjuguée de la bride.

Une cavité annulaire est avantageusement réalisée dans l'extrémité formant nez du corps de la broche sous la bague déformable coaxialement à celle-ci, cette cavité étant en communication de fluide avec au moins un canal d'amenée du fluide sous pression réalisé dans le corps de la broche et relié à une source d'alimentation en fluide sous pression.

Selon une variante de réalisation préférée, la bague déformable est solidaire d'une pièce rapportée à l'extrémité formant nez du corps de la broche et dans laquelle est réalisé le canal d'amenée du fluide sous pression, la cavité annulaire étant définie entre la bague déformable et la pièce rapportée.

Selon une autre variante de réalisation, la cavité annulaire et le canal d'amenée du fluide sous pression sont réalisés directement dans le corps de la broche.

Avantageusement, deux joints annulaires d'étanchéité sont disposés entre la bague déformable et l'extrémité formant nez de la broche de part et d'autre de la cavité annulaire et présentent en section transversale une forme en C permettant le déplacement radial de la bague déformable à sa position de blocage du corps de la tête au corps de la broche tout en assurant l'étanchéité de la cavité annulaire.

Les surfaces tronconiques externe et interne respectivement de la bague déformable et de la bride cylindrique comprennent des gorges à section transversale trapézoïdale et des nervures circulaires de forme conjuguée s'engageant les unes dans les autres en position de blocage du corps de la tête au corps de la broche.

La bride cylindrique comporte, solidaire de son extrémité frontale, une lèvre annulaire de raclage de la surface externe de la bague déformable lors de l'introduction de l'extrémité formant nez du corps de la broche dans la bride cylindrique préalablement au blocage du corps de la tête au corps de la broche.

Un moyen est prévu pour indexer la position angulaire du corps de la tête relativement au corps de la broche et comprend un doigt solidaire du corps de la tête parallèlement à l'arbre longitudinal de l'axe logé dans le corps de la tête et dont l'extrémité libre s'engage, en position de blocage du corps de la tête au corps de la broche, dans un orifice réalisé dans l'extrémité formant nez du corps de la broche.

En variante, le moyen d'indexation comprend une clavette ou un tenon solidaire du corps de la tête s'engageant, en position de blocage du corps de la tête au corps de la broche, dans une rainure réalisée dans l'extrémité formant nez du corps de la broche parallèlement à l'axe de l'arbre de la broche.

La bride cylindrique est amoviblement fixée au corps de la tête par des vis de fixation et l'arbre d'entraînement ou de manoeuvre de la tête est accouplé à l'arbre de la broche par une douille tronconique de l'arbre d'entraînement ou de manoeuvre rentrant dans l'arbre de la broche.

La tête est du type à renvoi d'angle selon lequel l'arbre logé dans le corps de la tête est accouplé à un second arbre, qui lui est notamment perpendiculaire, par l'intermédiaire de pignons coniques de manière à entraîner en rotation l'outil d'usinage d'une pièce disposé coaxialement au second arbre de la tête.

Selon une autre application, la tête est du type multibroche selon lequel l'arbre logé dans le corps de la tête est accouplé en rotation par des pignons dentés à au moins deux arbres d'entraînement respectivement de deux outils d'usinage d'une pièce.

Selon encore une autre application, la tête est du type à bras de préhension d'une pièce à déplacements commandés par la broche de la machine-outil.

L'invention vis également un procédé de fixation d'une tête de support d'au moins un outil à une broche d'une machine-outil utilisant le dispositif tel que défini précédemment et qui est caractérisé en ce qu'il consiste à positionner la tête de support d'outil relativement à la broche de la machine-outil de manière que l'arbre d'entraînement ou de manoeuvre logé dans le corps de la tête de support d'outil soit en alignement avec l'arbre de la broche, déplacer la broche de la machine-outil suivant l'axe longitudinal de l'arbre d'entraînement ou de manoeuvre jusqu'à ce que la douille tronconique de cet arbre rentre dans l'arbre de la broche et la surface périphérique de la bague déformable à l'extrémité formant nez du corps de la broche se trouve en regard de la surface interne de la bride cylindrique du corps de la tête de support, bloquer la douille dans l'arbre de la broche, et déformer radialement vers l'extérieur la bague par envoi de fluide sous pression sous celle-ci pour que la bague puisse se serrer sur la surface interne de la bride et bloquer rigidement de la sorte le corps de la tête de support d'outil au corps de la broche.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- La figure 1 est une vue d'une machine-outil conforme à l'art antérieur ;
- La figure 2 est une vue d'une broche de la machine-outil de la figure 1 à tête de renvoi d'angle ;
- La figure 3 est une vue schématique de la broche de la machine-outil et de la tête de renvoi d'angle de la figure 2 ;
- La figure 4 est une vue en coupe longitudinale d'une partie de la broche d'une machine-outil et de sa tête de renvoi d'angle fixée à la broche conformément à l'invention ;
- La figure 5 est une vue en coupe agrandie de la partie cerclée en V de la figure 4 ;
- Les figures 6 à 8 représentent les différentes phases permettant de fixer la tête d'usinage à renvoi d'angle à la broche principale de la machine-outil par le dispositif de l'invention ;
- La figure 9 est une vue schématique semblable à celle des figures 6 à 8 et représentant une variante de réalisation du dispositif de fixation de l'invention ;
- La figure 10 représente le dispositif de l'invention permettant de fixer une tête multibroche à la broche principale de la machine-outil ; et
- La figure 11 représente le dispositif de l'invention permettant de fixer une tête à bras de préhension à la broche principale de la machine-outil.

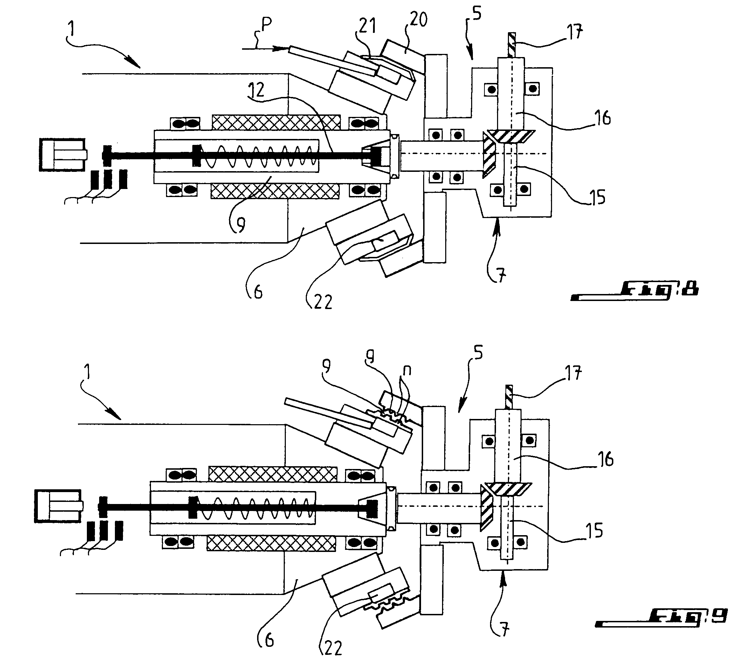

L'invention va être décrite tout d'abord en référence aux figures 4 à 9 qui représentent une partie d'une broche principale d'une machine-outil munie d'une tête de renvoi d'angle permettant d'usiner, par exemple par perçage, une pièce suivant une direction perpendiculaire à la direction de l'arbre moteur de la broche principale.

Les différents éléments identiques ou accomplissant les mêmes fonctions que ceux représentés aux figures 1 à 3 portent les mêmes références.

Selon l'invention, le dispositif de fixation de la tête de renvoi d'angle 5 à la broche 1 comprend une bride généralement cylindrique 20 solidaire du corps 7 de la tête 5 et une bague 21 fixée à l'extrémité formant nez 6a du corps 6 de la broche 1 coaxialement à cette extrémité et qui est réalisée en un matériau élastiquement déformable radialement vers l'extérieur sous l'effet d'une pression de fluide s'exerçant sous la bague 21 de manière à se serrer dans la bride 20 et à ainsi bloquer rigidement le corps 7 de la tête 5 au corps 6 de la broche 1.

De préférence, la bague déformable 21 a sa surface périphérique externe 21a de forme tronconique pouvant se serrer sous l'effet de la pression de fluide sur une surface tronconique interne conjuguée 20a de la bride 20.

Une cavité annulaire 22 est réalisée dans l'extrémité formant nez 6a du corps 6 de la branche 1 sous la bague déformable 21 coaxialement à cette dernière, la cavité 22 étant en communication de fluide avec une source d'alimentation en fluide sous pression (non représentée) par l'intermédiaire de canaux d'amenée de fluide sous pression réalisés dans l'extrémité formant nez 6a et le corps 6 de la branche 1. Comme cela ressort de la figure 4, ces canaux comprennent au moins un canal radial 23 débouchant dans la cavité annulaire 22 et des canaux 24 en communication de fluide avec une tubulure externe 25 raccordée d'une part au corps 6 de la broche 1 et d'autre part à la source d'alimentation.

De préférence, la bague déformable 21 est solidaire, par l'intermédiaire de vis de fixation 26, d'une pièce 27 rapportée à l'extrémité formant nez 6a du corps 6 de la broche 1 et les canaux 23, 24 sont réalisés dans la pièce rapportée 27. La cavité annulaire 22 est alors définie entre la bague déformable 21 et la pièce rapportée 27. La pièce rapportée 27 est fixée au corps 6 de la broche 1 par l'intermédiaire d'une bride 27a et de vis de fixation 28. Bien entendu, les canaux 23, 24 et la cavité annulaire 22 peuvent être réalisés directement dans l'extrémité formant nez 6a du corps 6 de la broche 1.

La bride 20 est amoviblement fixée au corps 7 de la tête 5, coaxialement à l'arbre d'entraînement 8, par l'intermédiaire de vis de fixation 29. La bride 20 est ainsi située concentriquement à la douille 10 solidaire de l'arbre 8 permettant d'accoupler cet arbre à l'arbre primaire 9 de la broche 1.

Deux joints annulaires 30, à section transversale en forme de C, sont disposés entre la pièce rapportée 27 et la bague déformable 21 de part et d'autre de la cavité annulaire 22 de façon que les lèvres de chaque joint annulaire 30 puissent s'écarter radialement l'une de l'autre lorsque la bague 21 est radialement déformée vers l'extérieur pour continuer d'assurer l'étanchéité au fluide de la cavité 22. Chaque joint 30 est logé dans une gorge radialement externe 31 de la pièce rapportée 27. Bien entendu, chaque joint 30 peut avoir une forme différente de celle en C mentionnée précédemment.

La bride 20 comprend, solidaire de son extrémité frontale, une lèvre annulaire 32 permettant le raclage de la surface externe 21a de la bague déformable 21 lors de l'introduction de l'extrémité formant nez 6a du corps 6 de la broche 1 dans la bride 20 préalablement au blocage du corps 7 de la tête 5 au corps de broche 6.

La lèvre de raclage 32 est solidaire d'un bloc annulaire 33 fixé à la paroi d'extrémité frontale 20b de la bride 20 par l'intermédiaire d'une plaque annulaire 34 et de vis de fixation 35 de la plaque 34 à la paroi 20b de manière que la plaque 34 maintienne le bloc 33 de la lèvre 32 dans une cavité annulaire 20c de la bride 20. La lèvre 32 et le bloc 33 sont réalisés en une seule pièce en un matériau élastomère.

Comme représenté en figure 4, le corps 7 de la tête 5 est positionné en rotation relativement au corps 6 de la broche 1 par l'intermédiaire du doigt d'indexation 18 solidaire du corps 7 parallèlement à l'arbre 8 et dont l'extrémité libre peut s'engager dans la rainure 19 réalisée dans la paroi frontale 6a1 de l'extrémité formant nez 6a du corps de broche 6.

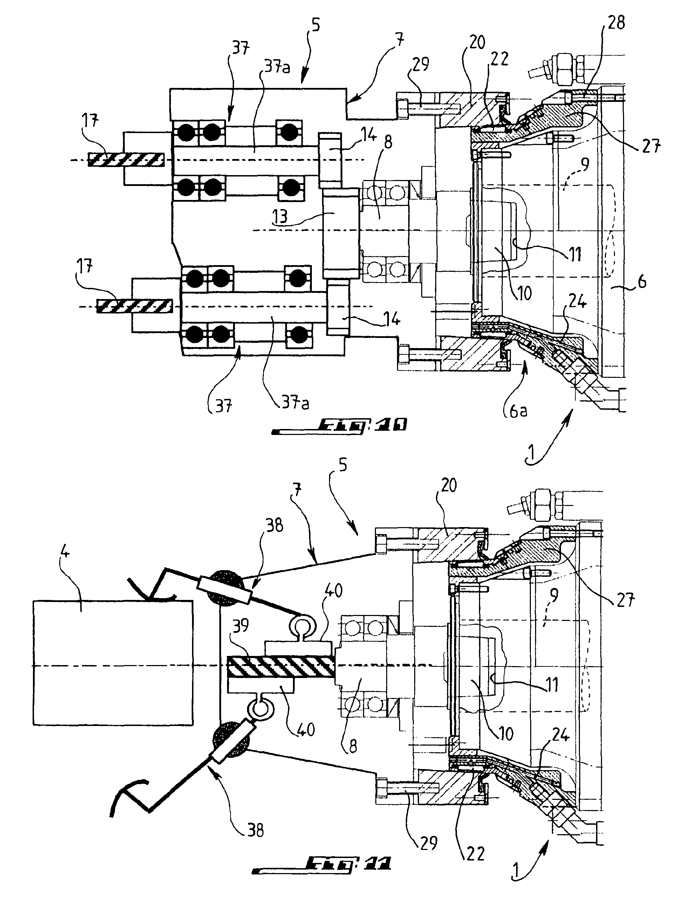

Cependant, selon une variante de réalisation préférée, le moyen d'indexation du corps 7 de la tête 5 relativement au corps de broche 6 comprend, comme cela ressort de la figure 5, une clavette 36 solidaire de la bride 20 en faisant saillie radialement à l'intérieur de celle-ci et pouvant s'engager, lors du blocage de la tête 5 à la bride 1, dans une rainure 27a réalisée dans l'extrémité libre de la pièce rapportée 27 parallèlement à l'axe longitudinal de l'arbre 9. La clavette 36 peut être remplacée par un tenon.

Le procédé de fixation de la tête à renvoi d'angle 5 à la broche 1 ressort déjà de la description qui précède et va être maintenant expliqué.

Selon une première étape représentée en figure 6, la tête 5 est présentée, de préférence automatiquement, devant la broche 1 de la machine-outil par le système de changement d'outil de cette machine de manière que l'axe longitudinal de l'arbre d'entraînement 8 muni à son extrémité de la douille tronconique 10 soit coaxial à l'arbre primaire de la broche 1. A cette étape, la pression de fluide dans la cavité annulaire 22 est nulle de sorte que la bague 21 occupe sa position de repos non déformée.

Dans la seconde étape représentée en figure 7, la machine-outil lance le déplacement de la broche 1 suivant l'axe Z de manière à introduire la douille tronconique 10 dans la cavité tronconique conjuguée 11 en bout de l'arbre 9. Ensuite, la machine outil commande le déplacement en translation du tirant 12 dans un sens permettant le blocage par coincement de la douille 10 dans la cavité tronconique 11 pour ainsi accoupler en rotation l'arbre 8 à l'arbre 9. La figure 7 montre que la bride 20 schématisée par sa partie tronconique interne est positionnée concentriquement avec jeu relativement à la bague déformable 21, ce qui permet de lancer le bridage de la broche à l'arbre d'entraînement 8 de la tête 5 sans interférence avec le blocage hydraulique de la tête 5 à la bride 1. Lors de l'avance suivant l'axe Z de la machine de la broche 1, la lèvre de raclage 32, non représentée aux figures schématiques 6 et 7, permet le nettoyage de la surface extérieure de la bague de serrage 21.

Dans l'étape représentée en figure 8, du fluide sous pression est introduit dans la cavité annulaire 22 comme indiqué par la flèche P pour gonfler par déformation la bague 21 qui, en se déformant radialement vers l'extérieur, permet le blocage par serrage de la bride 20 au corps 6 de la broche 1. De la sorte, le corps 7 de la tête à renvoi d'angle 5 est rigidement relié au corps 6 de la broche 1 de façon à résister à tout effort exercé sur la tête 5 lors de l'usinage d'une pièce, sans provoquer de basculement de cette tête relativement au corps 6 de la broche 1.

Bien entendu, lors du bridage de l'arbre 8 à l'arbre 9, la tête de renvoi d'angle 5 est indexée relativement à la broche 1 par le doigt 18 ou la clavette 36 d'indexation.

La procédure de démontage de la tête de renvoi d'angle de la broche 1 s'effectue suivant les opérations inverses à celles décrites précédemment aux figures 6 à 8.

Selon la variante de réalisation représentée en figure 9, les surfaces tronconiques interne 20a de la bride 20 et externe 21a de la bague déformable 21 comprennent une succession de gorges à section transversale trapézoïdale g et de nervures circulaires de forme conjuguée n pouvant s'engager les unes dans les autres lors du blocage du corps 7 de la tête 5 au corps 6 de la broche 1 de manière à permettre un blocage axial plus énergique et plus précis de la tête 5 par rapport à la broche 1.

Les figures 10 et 11 représentent d'autres applications possibles non limitatives d'utilisation du dispositif de fixation ci-dessus décrit de l'invention.

Selon la figure 10, la bride 20 est solidaire du corps 7 d'un boîtier multibroche 5, dans le cas présent à deux broches secondaires 37 s'étendant parallèlement à l'arbre d'entraînement 8 pour permettre la fixation du boîtier multibroches à l'extrémité formant nez 6a du corps 6 de la broche 1. Les arbres 37a des broches 37 de support d'outils 17 sous forme de forets sont accouplés au pignon droit 13 de l'arbre 8 par des pignons droits 14 portés aux extrémités de ces arbres.

On notera par ailleurs que l'angle formé entre la tête 5 et le corps de la tête 7 à renvoi d'angle, au lieu d'être de 90°, peut prendre toutes les valeurs possibles, par exemple de 120°. Ces valeurs dépendent en réalité essentiellement de la forme de la pièce à réaliser.

Selon la figure 11, le dispositif de fixation permet de fixer à la broche 1 un boîtier 5 à bras de préhension 38 d'une pièce, dans le cas présent au nombre de deux, commandés par l'arbre primaire 9 de la broche 1 de façon à se rapprocher ou s'écarter par pivotement l'un de l'autre. Ainsi, l'arbre d'entraînement 8 situé dans le corps 7 du boîtier 5 à bras de manoeuvre 38 est solidaire en rotation d'une vis sans fin 39 sur laquelle est montée en translation une douille-écrou 40 à laquelle sont articulés les bras 38 de manière que l'avancement ou le recul de la douille 40 suivant l'axe longitudinal de l'arbre 8 provoque l'écartement ou le rapprochement des bras 38 également articulés au corps 7.

Le dispositif de fixation de l'invention permet de rigidifier la liaison entre le corps de broche de la machine-outil et un boîtier tel qu'une tête d'usinage à renvoi d'angle, une tête multibroche, un boîtier à bras de préhension ou autres. Cette rigidification permet d'augmenter notamment la capacité d'usinage d'une machine-outil et donc sa productivité et il a été constaté que le dispositif de l'invention permet de supprimer un centre d'usinage sur cinq, ce qui réduit considérablement les investissements en machines. Le dispositif de fixation fonctionnant par déformation élastique de la bague de serrage, il ne nécessite aucun entretien ou graissage et ne peut prendre de jeu.

Le dispositif de fixation de l'invention permet également :
- de centrer de manière précise la tête d'usinage par rapport au corps de broche ;
- d'envisager tout type de tête, par exemple de serrage de pièces, de mortaisage, etc...
- une adaptation à tous les principes de têtes existant sur le marché sans augmentation substantielle du prix des têtes ;
- une compatibilité avec toutes les options développées par les fabricants de telles têtes (arrosage par le centre, réglage de l'angle,...) ;
- une compatibilité avec le stockage des têtes dans un magasin d'outils avec un changement et un serrage automatique ;
- une compatibilité avec un lavage ou soufflage de l'interface de serrage au moment de la mise en place pour garantir la fonction ;
- une augmentation de la précision d'indexage angulaire avec un encastrement entre la bague déformable et la bride.

En outre, les performances en vitesse et accélération de la machine-outil sont maintenues grâce à une faible masse du dispositif. Le faible encombrement en diamètre de la bride permet de conserver un nez de broche relativement fin lorsque la broche est notamment utilisée avec des outils normaux pour passer dans des montages à prise de pièces.

## Revendications

1. Dispositif de fixation d'une tête (5) de support d'au moins un outil à une broche (1) d'une machine-outil selon lequel l'arbre (9) de la broche (1) logé dans le corps (6) de celle-ci est accouplé coaxialement à un arbre (8) d'entraînement ou de manoeuvre de l'outil logé dans le corps (7) de la tête de support (5) de cet outil, **caractérisé en ce qu'**il comprend une bague (21) fixée à l'extrémité formant nez (6a) du corps (6) de la broche
(1) coaxialement à cette dernière et réalisée en un matériau élastiquement déformable radialement vers l'extérieur sous l'effet d'une pression de fluide s'exerçant sous celle-ci de manière à se serrer dans une bride généralement cylindrique (20) solidaire du corps (7) de la tête de support (5) et à ainsi bloquer rigidement ce dernier au corps (6) de la broche (1).

2. Dispositif selon la revendication 1, **caractérisé en ce que** la bague déformable (21) présente une surface périphérique externe tronconique (21a) pouvant se serrer sous l'effet de la pression de fluide sur une surface tronconique interne conjuguée (20a) de la bride (20).

3. Dispositif selon la revendication 1 ou 2, **caractérisé en ce qu'**il comprend une cavité annulaire (22) réalisée dans l'extrémité formant nez (6a) du corps (6) de la broche (1) sous la bague déformable (21) coaxialement à celle-ci et qui est en communication de fluide avec au moins un canal d'amenée du fluide sous pression (23, 24) réalisé dans le corps (6) de la broche (1) et relié à une source d'alimentation en fluide sous pression.

4. Dispositif selon la revendication 3, **caractérisé en ce que** la bague déformable (31) est solidaire d'une pièce (27) rapportée à l'extrémité formant nez (6a) du corps (6) de la broche (1) et dans laquelle est réalisé le canal d'amenée du fluide sous pression (23, 24), la cavité annulaire (22) étant définie entre la bague déformable (21) et la pièce rapportée (27).

5. Dispositif selon la revendication 3, **caractérisé en ce que** la cavité annulaire (22) et le canal d'amenée du fluide sous pression (23, 24) sont réalisés directement dans le corps (6) de la broche (1).

6. Dispositif selon l'une des revendications 3 à 5, **caractérisé en ce que** deux joints annulaires d'étanchéité (30) sont disposés entre la bague déformable (21) et l'extrémité formant nez (6a) de la broche (1) de part et d'autre de la cavité annulaire (22) et présentent en section transversale une forme en C permettant le déplacement radial de la bague déformable (21) à sa position de blocage du corps (7) de la tête (5) au corps (6) de la broche (1) tout en assurant l'étanchéité de la cavité annulaire (22).

7. Dispositif selon l'une des revendications 2 à 6, **caractérisé en ce que** les surfaces tronconiques externe et interne (21a,20a) respectivement de la bague déformable (21) et de la bride cylindrique (20) comprennent des gorges (g) à section transversale trapézoïdale et des nervures circulaires (n) de forme conjuguée s'engageant les unes dans les autres en position de blocage du corps (7) de la tête (5) au corps (6) de la broche (1).

8. Dispositif selon l'une des revendications précédentes, **caractérisé en ce que** la bride cylindrique (20) comporte, solidaire de son extrémité frontale, une lèvre annulaire (32) de raclage de la surface externe (21a) de la bague déformable (21) lors de l'introduction de l'extrémité formant nez (6a) du corps (6) de la broche (1) dans la bride cylindrique (20) préalablement au blocage du corps (7) de la tête (5) au corps (6) de la broche (1).

9. Dispositif selon l'une des revendications précédentes, **caractérisé en ce qu'**il comprend un moyen (18, 36) d'indexation de la position angulaire du corps (7) de la tête (5) relativement au corps (6) de la broche (1).

10. Dispositif selon la revendication 9, **caractérisé en ce que** le moyen d'indexation comprend un doigt (18) solidaire du corps (7) de la tête (5) parallèlement à l'axe longitudinal de l'arbre (8) logé dans le corps (7) de la tête (5) et dont l'extrémité libre s'engage, en position de blocage du corps (7) de la tête (5) au corps (6) de la broche (1), dans un orifice (19) réalisé dans l'extrémité formant nez (6a) du corps (6) de la broche (1).

11. Dispositif selon la revendication 9, **caractérisé en ce que** le moyen d'indexation comprend une clavette ou un tenon (36) solidaire du corps (7) de la tête (5) s'engageant, en position de blocage du corps (7) de la tête (5) au corps (6) de la broche (1), dans une rainure (27a) réalisée dans l'extrémité formant nez (6a) du corps (6) de la broche (1) parallèlement à l'axe de l'arbre (9) de la broche (1).

12. Dispositif selon l'une des revendications précédentes, **caractérisé en ce que** la bride cylindrique (20) est amoviblement fixée au corps (7) de la tête (1) par des vis de fixation (29).

13. Dispositif selon l'une des revendications précédentes, **caractérisé en ce que** l'arbre d'entraînement ou de manoeuvre (8) est accouplé à l'arbre (9) de la broche (1) par une douille tronconique (10) de l'arbre d'entraînement ou de manoeuvre (8) rentrant dans l'arbre (9) de la broche (1).

14. Dispositif selon l'une des revendications précédentes, **caractérisé en ce que** la tête (5) est du type à renvoi d'angle selon lequel l'arbre (8) logé dans le corps (7) de la tête (5) est accouplé à un second arbre (15), qui lui est notamment perpendiculaire, par l'intermédiaire de pignons coniques (13, 14) de manière à entraîner en rotation l'outil d'usinage d'une pièce disposé coaxialement au second arbre (15) de la tête.

15. Dispositif selon l'une des revendications 1 à 13, **caractérisé en ce que** la tête (5) est du type multibroche selon lequel l'arbre (8) logé dans le corps (7) de la tête (5) est accouplé en rotation par des pignons dentés (13, 14) à au moins deux arbres d'entraînement (37a) respectivement de deux outils d'usinage (17) d'une pièce.

16. Dispositif selon l'une des revendications 1 à 13, **caractérisé en ce que** la tête (5) est du type à bras (38) de préhension d'une pièce (4) à déplacements commandés par la broche (1) de la machine-outil.

17. Procédé de fixation d'une tête de support d'au moins un outil à une broche d'une machine-outil utilisant le dispositif tel que défini dans l'une quelconque des revendications 1 à 16, **caractérisé en ce qu'**il consiste à positionner la tête de support d'outil (5) relativement à la broche (1) de la machine-outil de manière que l'arbre d'entraînement ou de manoeuvre (8) logé dans le corps (7) de la tête de support d'outil (5) soit en alignement avec l'arbre (9) de la broche (1), déplacer la broche (1) de la machine-outil suivant l'axe longitudinal de l'arbre d'entraînement ou de manoeuvre (8) jusqu'à ce que la douille tronconique (10) de cet arbre rentre dans l'arbre (9) de la broche (1) et la surface périphérique (21a) de la bague déformable (21) à l'extrémité formant nez (6a) du corps (6) de la broche (1) se trouve en regard de la surface interne (20a) de la bride cylindrique (20) du corps (7) de la tête de support (5), bloquer la douille (10) dans l'arbre (9) de la broche (1), et déformer radialement vers l'extérieur la bague (21) par envoi de fluide sous pression sous celle-ci pour que la bague (21) puisse se serrer sur la surface interne (20a) de la bride (20) et bloquer rigidement de la sorte le corps (7) de la tête de support d'outil (5) au corps (6) de la broche (1).
